# EUROPEAN PATENT SPECIFICATION

(11) **EP 2 548 181 B1**
(45) Date of publication and mention of the grant of the patent: **02.03.2016**
(21) Application number: 11756661.2
(22) Date of filing: 15.03.2011
(51) Int. Cl.: G07C 13/00, G06Q 10/10, G06Q 50/00

(54) **VOTING COMMUNICATING SYSTEM**
WAHLKOMMUNIKATIONSSYSTEM
SYSTÈME DE TRANSMISSION DE VOTES

(30) Priority: 15.03.2010 US 314100 P
(43) Date of publication of application: 23.01.2013
(73) Proprietor: BT Americas Inc., Irving, TX 75039 (US)
(72) Inventor: SEYER, Dan, Palo Alto, CA 94306 (US); LEE, Raymond, San Francisco, CA 94118-2018 (US); BREESE, Dewayne Dustin, Monument, CO 80132 (US); POTRANANDANA, Tim, San Bruno, CA 94066 (US)
(74) Representative: Nash, Roger William
(86) International application number: PCT/US2011/000475
(87) International publication number: WO 2011/115671

(56) References cited:
- EP-A1- 1 530 169
- US-A1- 2002 083 126
- US-A1- 2003 149 616
- US-A1- 2005 265 527
- US-A1- 2006 041 514
- US-A1- 2007 066 328
- US-A1- 2007 112 648
- US-A1- 2007 272 749
- US-A1- 2008 013 701
- US-A1- 2008 126 197
- US-A1- 2010 064 306

## Description

### CROSS-REFERENCE TO RELATED APPLICATIONS

This application claims priority benefit under 35 U.S.C. $119(e) of U.S. Provisional Application No. 61/314,100, entitled, "Voting Communication System," filed Mar. 15, 2010, which is hereby incorporated by reference in its entirety.

### COPYRIGHT NOTICE

A portion of the disclosure of this patent document contains material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice applies to the software and data as described below and in the drawings that form a part of this document: Copyright 2010, Ribbit Inc. All Rights Reserved.

### BACKGROUND

Television networks are increasingly including competition events and talent contests in their broadcast schedules, as a part of the trend towards "reality programming." In order to enhance end-user engagement with such competitions and contests, television networks often poll viewers or invite viewers to vote on particular issues or for particular contestants. For example, audiences may be polled by inviting the audiences to dial a particular telephone number, or send a Short Message Service (SMS) message to a particular short code. A television network may partner with a live audience polling service provider, or deploy its own live audience polling solution.

US Patent Application No. 2003/0149616 A1 discloses an interactive voting application which is broadcast to a broadcast receiver, such as a set-top box. The broadcast receiver executes the voting application, allowing a voter to cast one or more votes on an electronic ballot, and then transmits the votes to a server.

US Patent Application No. 2002/0083126 A1 discloses an online election system, in which a voter casts their vote through a host server, and the host server removes the voter's identification from the vote before it is stored and tallied.

European Patent Application EP 1530169 A1 discloses a voting server in communication with several mobile terminals though a cellular network. The voting server checks an identification number for the mobile terminal when validating the vote.

### BRIEF DESCRIPTION OF DRAWINGS

Some embodiments are illustrated by way of example and not limitation in the figures of the accompanying drawings in which:
FIG. 1 is a diagrammatic representation of a networked computer system environment, within which an example embodiment may be deployed;
FIG. 2 is a table diagram illustrating a number of example tables that may be maintained by a vote communication application, according to an example embodiment;
FIG. 3 is a block diagram showing components or modules of a vote communication application, according to some example embodiments;
FIG. 4 is a swim lane flowchart illustrating a method, according to an example embodiment, to receive user vote (or poll) information at a vote communication system;
FIG. 5 is a screen shot showing a user registration interface, according to some example embodiments, that may be presented by a vote communication application to a user;
FIG. 6 is a screen shot showing a user vote input interface, according to some example embodiments, that may be presented by the vote communication application to a user;
FIG. 7 is a screen shot showing a user vote verification interface, according to some example embodiments, that may be presented by the vote communication application to a user;
FIG. 8 is a screen shot showing a user vote total interface, according to some example embodiments, that may be presented by the vote communication application to a user;
FIG. 9 is a screen shot showing a user vote history interface, according to some example embodiments, that may be presented by the vote communication application to a user; and
FIG. 10 is a block diagram of a machine, in the example form of a computer system, within which is a set of instructions, for causing the machine to perform any one or a combination of the methodologies discussed herein, to be executed.

### DETAILED DESCRIPTION

The description that follows includes illustrative systems, methods, techniques, instruction sequences, and computing machine program products that embody various aspects of the inventive subject matter described herein. In the following description, for purposes of explanation, numerous specific details are set forth to provide an understanding of various embodiments of the inventive subject matter. It will be evident, however, to those skilled in the art that embodiments of the inventive subject matter may be practiced without these specific details. Further, well-known instruction instances, protocols, structures, and techniques have not been shown in detail.

As used herein, the term "or" may be construed in either an inclusive or exclusive sense. Similarly, the term "exemplary" is construed merely to mean an example of something or an exemplar and not necessarily a preferred or ideal means of accomplishing a goal. Additionally, although various exemplary embodiments discussed below focus on a voting communication system, the embodiments are given merely for clarity in disclosure. Thus any type of electronic commerce or electronic business system and method, including various system architectures, may employ various embodiments of the systems and methods of enriching voting experiences for contests or competitions, as described herein, and are considered as being within a scope of the inventive subject matter described.

An application, according to some example embodiments, enables the provision of enriched voting or polling experiences for contests or competitions, such as popular-vote talent contests (e.g., American Idol^{®}). In some example embodiments, a vote communicating application obviates the need by a user to remember a number (e.g., a telephone number or short message code) in order to cast a vote. The application may also support bulk voting (e.g.. the ability to vote for more than one person in a single voting transaction), and multi-voting (e.g., the capability to vote multiple times for more than one entity, such as a person participating in a popular-vote talent contest). In some example embodiments, the application may enable the user to allocate votes (or voting rights) across a set of eligible entities (e.g., competition contestants), as the user sees fit. The application may also enable the user to share voting actions with a social network and also invite members of the user's social network to vote.

According to some example embodiments, a method, and related machine-readable medium, includes receiving, at a communication system (e.g., a voice-over-Internet protocol (VoIP) telephony and messaging system such as that provided by Ribbit Corporation of Mountain View, California), an allocation of user votes across a set of entities (e.g., contestant participants) eligible to receive votes. The communication system then automatically initiates communications, through, for example, a voting communication interface, to a vote receiving system, in accordance with the allocation of user votes. The initiated communications are to register the user votes with the vote receiving system.

The initiating of the communications may include initiating and placing a telephone call to a dedicated telephone number that is uniquely associated with an entity of a set of entities, in order to register a user vote for the relevant entity with the vote receiving system. The initiating of the communications may also include sending a message (e.g., an SMS message) to a dedicated number (e.g., telephone number or short message code) that is uniquely associated with an entity or a set of entities, in order to register a user vote for the entity at the vote receiving system.

In addition to receiving an allocation of user votes, the method may include receiving, at the communication system, a communication identifier (e.g., a mobile telephone number, e-mail address, or a user name/password or other identifier, combination), associated with the user. The communication identifier is provided from the communication system to the vote receiving system, in order to identify a source of one or more votes.

The communication system may also verify that the communication identifier (e.g., the mobile telephone number or the e-mail) is associated with the user by providing verification information to the user, using the communication identifier, and receiving the verification information back from the user. The communication identifier may, in some example embodiments, be provided to the vote receiving system as part of the initiation of communications from the communication system to the vote receiving system.

In some example embodiments the allocation of user votes is received at the communication system via a vote input interface, which is presented to the user, in order to solicit the allocation of user votes across the set of entities. The vote input user interface may also be configured to receive the communication identifier (e.g., mobile telephone number or e-mail address) from the user.

In some example embodiments, the communication system may calculate a total number of votes received at the communication system for each entity of the set of entities. This calculated total number of votes for each entity may be presented to at least one user of the communication system.

In some example embodiments, the communication system may determine a number of relationships of a user with other users (e.g., "friends"), and may communicate user votes, received at the communication system from the user's friends, for the set of entities to the user. The communication system may determine the relationships by providing authorization information (e.g., a password/username) received from the user to a social networking system. The authorization information is used to authorize the social networking system to provide relationship information, pertaining to the user, to the communication system.

The communication system may also receive identification information (e.g., e-mail addresses or mobile telephone numbers) of a number of further users from a particular user and, using this communication information, invite further users to register with the communication system. These further users may also be invited to provide allocations of user votes across the set of entities.

The method may also include increasing a number of allocations of user votes to a particular user, based on the number of further users that register with the communication system as a result of identification information provided by that user. The method may also include maintaining a record of the set of entities eligible to receive votes at the communication system and may include dynamically modifying the set of entities based on information received from the vote receiving system.

In an example embodiment, a method and related non-transitory machine-readable storage medium are provided. The method includes receiving, at a communication system, an allocation of user votes across a set of entities eligible to receive user votes. Communications are automatically initiated from the communication system to a vote receiving system in accordance with the allocation of user votes. The communications registers the user votes with the vote receiving system.

In another example embodiment, a system to enrich voting experiences for contests of competitions is provided. The system includes a communication system to receive an allocation of user votes across a set of entities eligible to receive the user votes. The communication system includes an interface to receive information for a social networking system, an interface to receive votes from a user, and a voting communications interface. The voting communication interface can automatically initiate communications from the communication system to a vote receiving system in accordance with the allocation of the user votes. The communications registers the user votes with the vote receiving system. These and other embodiments are discussed in more detail, below.

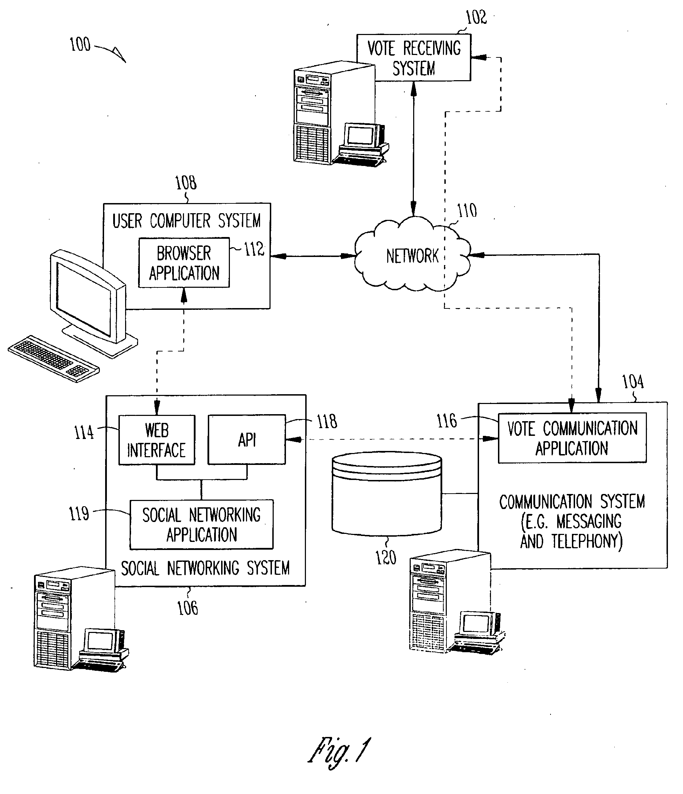

FIG. 1 is a diagrammatic representation of an environment 100, within which an example embodiment of the inventive subject matter may be deployed. The environment 100 is shown to include a number of computer-based systems including a vote receiving (or polling) system 102 (e.g., such as the service offered by Poll Everywhere, Inc. of San Francisco, California), a communication system 104 (e.g., the RIBBIT platform developed by Ribbit Corp.), a social networking system 106 (e.g., the FACEBOOK^{®} platform developed by Facebook, Inc. of Palo Alto, Calif.) that hosts a social networking application, and a user computer system 108 (e.g., a desktop computer system, laptop computer system, or mobile device such as a cell phone or smart phone). Each of the systems 104-108 is communicatively coupled via one or more networks 110 (e.g., the Internet or wireless networks or wired networks (e.g., plain old telephone service (POTS))).

The user computer system 108 is shown to host a browser application 112, via which a user can access a web interface 114 provided by, for example, the social networking system 106. In some example embodiments, the web interface 114 may expose third party applications, which are either hosted by the social networking system 106, or for which the social networking system 106 acts as a. proxy. To this end, the communication system 104 is shown to host a vote communication application 116, which communicates with the social networking system 106 via one or more interfaces, in the example form of an Application Program Interface (API) 118. The vote communication application 116 is described in more detail, below. The API 118 may in turn expose an interface of the vote communication application 116 via the web interface 114 to the browser application 112. In other embodiments, the vote communication application 116 may be hosted by the social networking system 106, on behalf of the communication system 104. In either example embodiment, an interface to the vote communication application 116 is exposed, via the social networking system 106, within the browser application 112 to a user of the user computer system 108.

The vote communication application 116 exposes an interface to a user of the user computer system 108 that enables the user to allocate a number of votes across a set of entities (e.g., contestants). The vote communication application 116 is also arranged to operatively store vote allocations from a user in an associated database 120. The vote communication application 116 can also present a user interface that allows a user to enter a communication identifier, such as, for example, a phone number, which the user wishes to use for the purposes of identifying votes submitted. The vote communication application 116 may additionally implement a verification mechanism to verify that a user is in fact associated with a provided communication identifier.

In some example embodiments, the vote communication application 116, at preset time intervals and for every user of the vote communication application, retrieves stored vote allocations and dials communication identifiers (e.g., phone numbers) associated with the respective entities for which users can cast votes. The dialing of such phone numbers is performed as per the vote allocations by the users of the system. For example, where an entity is a contestant on a reality television program, the vote communication application 116 may, at a predetermined time interval, determine the number of votes for the particular contestant received from various users, and dial a phone number associated with the relevant contestant (e.g., 1-800-555-JOHN) a number of times that corresponding to the number of votes a particular user has allocated to the relevant contestant. In addition, the dialing of the phone number associated with the contestant is performed using the phone number provided by the user as the caller ID for the call.

In various example embodiments, the phone numbers associated with entities that are eligible to receive votes (e.g., contestants) may be administered by the vote receiving system 102, which operatively counts the number of telephone calls (or SMS messages or e-mail messages) that are initiated by the vote communication application 116 of the communication system 104. As noted below, each of these communications, while being to a number that is uniquely associated with each of the entities eligible to be voted for, also includes a communication identifier (e.g., a mobile telephone number) of the user that cast or allocated the vote. In some example embodiments, the mobile telephone number may be used as the caller ID and is in this way communicated, together with a vote registration, from the communication system 104 to the vote receiving system 102.

In various example embodiments, a vote can also be initiated by leveraging a data API if the vote receiving system 102 exposes it publicly or privately. Data APIs are known independently in the art and allow programmers to create applications that read, write, and modify data from various services (e.g., web-based services such as YouTube^{®}). In various other embodiments. even without a data API, votes can still be registered. For example, votes may be registered if the receiving system 102 provides a web interface, such as a website accessible by the browser application 112.

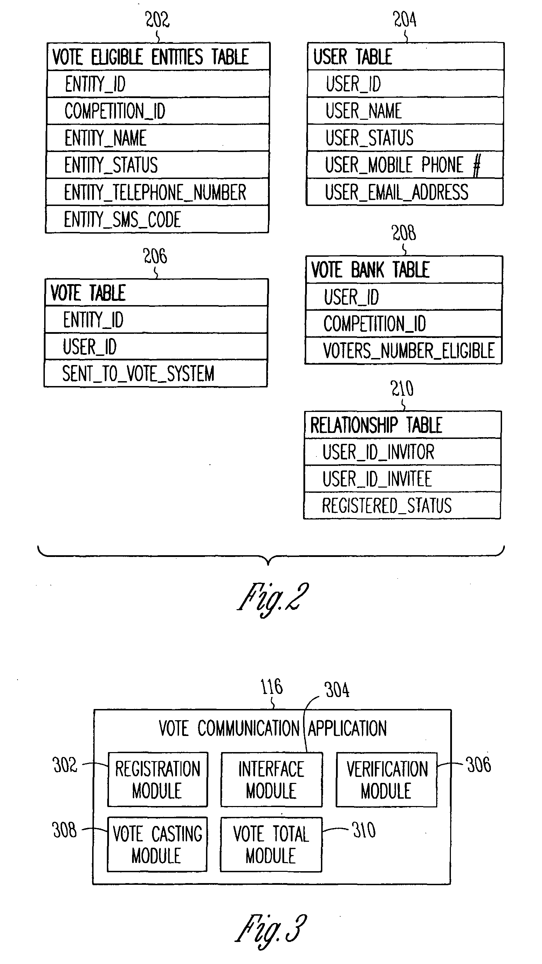

FIG. 2 is a table diagram illustrating a number of tables, according to some example embodiments. One or more of the identifiers or fields within the various tables may be described and the one or more completed fields may be recorded or otherwise stored. The tables may be maintained, for example, within the associated database 120 of the communication system 104, both shown in FIG. 1.

An entity table 202 contains an entry for each entity (e.g., contestant) of a contest and competition for which a user can submit votes using the vote communication application 116 of FIG. 1. A unique communication identifier (e.g., a telephone number or a short message code) may be associated with each of the vote eligible entities, and the communication system 104 may initiate communications using these communication identifiers in order to register votes via respective users for the relevant entity.

A user table 204 contains a unique record for each of the registered users of the vote communication application 116. The user table 204 similarly includes a unique communication identifier (e.g., a mobile telephone number or an e-mail address) for each of the users.

A vote table 206 stores a record identifying vote allocations received by the communication system 104 and registered by the communication system 104 with the vote receiving system 102 of FIG. 1 for a particular entity, on behalf of a user. At this end, the vote table 206 stores, for each vote, an entity identifier for the voted-for entity, a user identifier for the user that allocated the vote, and a "sent to vote system" flag that is set upon successful registration of a vote with the vote receiving system 102 by the communication system 104.

With continued reference to FIG. 2, a vote bank table 208 maintains a record for each user, of a number of eligible votes, per contest or competition, which the particular user is eligible or authorized to allocate. As discussed in more detail below, a verification may be made as to eligibility, number, and allocation of votes.

A relationship table 210 stores the relationships between users, and maintains the record of which users have invited which further users (e.g., friends) to register with the vote communication application 116 (FIG. 1). To this end, a "registered status" is either set or not set, depending on whether an invitee user has registered with the vote communication application 116, responsive to an invitation initiated by an inviter user.

FIG. 3 is a block diagram showing components or modules of the vote communication application 116 of FIG. 1, according to some example embodiments. The vote communication application 116 is shown to include a registration module 302, an interface module 304, a verification module 306, a vote casting module 308, and a vote total module 310.

With concurrent reference to FIGS. 1 and 3, the registration module 302 allows a user of the user computer system 108 to register with the communication system 104 through, for example, the social networking system 106. Upon or after registration, the communication system 104 generates and presents a vote input interface (not shown explicitly) to the user. After the user casts one or more votes as allocated by the communication system 104, the verification module 306 verifies an identifier of the user. The vote casting module 308 then initiates communications to the vote receiving system 102 to register the user's one or more votes. After receiving a confirmation of the votes from the vote receiving system 102, the vote total module 310 generates and presents to the user, via, for example, an interface, of the total number of votes cast for the entity or entities.

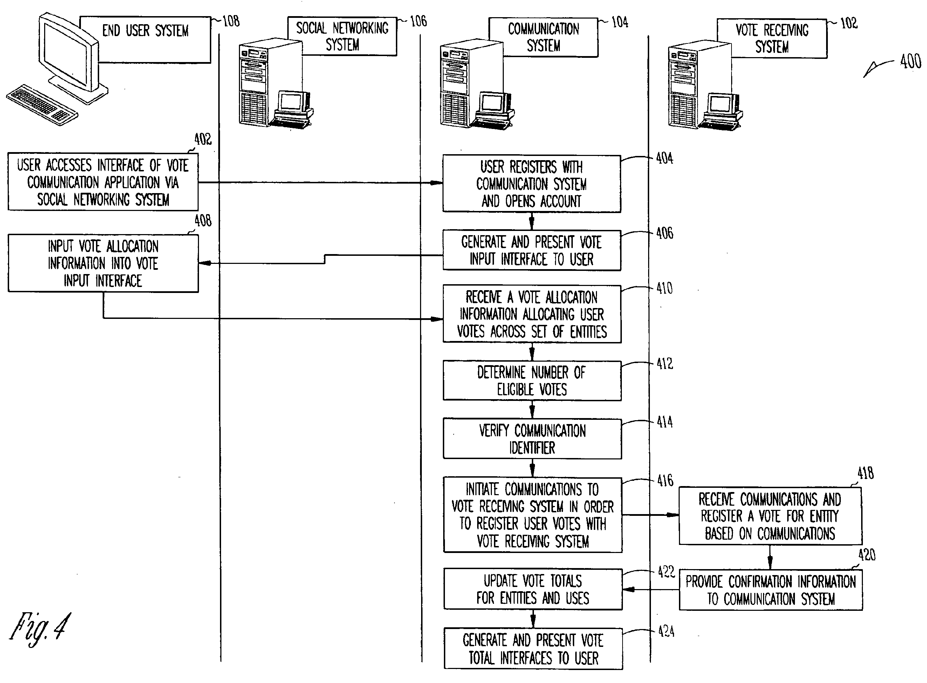

FIG. 4 is a swim lane flowchart illustrating a method 400, according to some example embodiments, to receive and process user voting or polling information. With concurrent reference to FIGS. 1 and 3, the method 400 commences at operation 402, where a user accesses a registration interface for the vote communication application 116 that is presented via the browser application 112. As noted above, in some example embodiments, interfaces of the vote communication application 116 may be exposed to the user computer system 108 via the social networking system 106. Further, while the vote communication application 116 is described in this example as being hosted by the communication system 104, in other embodiments, the vote communication application 116 may be hosted by the social networking system 106.

At a registration operation 404, the user registers with the communication system 104 and opens an account with the vote communication application 116. The registration module 302 of the vote communication application 116 may, as part of the registration process, create an entry within the user table 204 of FIG. 2 for the user as part of the registration process. The registration module 302 further may solicit the various information types shown to populate the user table 204, as needed, from the user.

At operation 406, the interface module 304 of the vote communication application 116 of the communication system 104 may generate and present a vote input interface to the user, within the browser application 112. The vote input interface prompts the user for an allocation of user votes across a set of entities eligible to receive votes. The vote input interface may also prompt the user for a communication identifier (e.g., a mobile telephone number) to be used by the communication system when communicating votes to the vote receiving system 102 on behalf of the user. The user inputs vote allocation information and a communication identifier into the vote input interface at operation 408.

At operation 410, the communication system 104 receives the vote allocation information and, optionally, the communication identifier. The vote allocation information indicates a user allocation of votes across the set of eligible entities (e.g., contestants). Further, at operation 410, the vote allocation information may be used to populate the vote table 206 of FIG. 2. Specifically, each of the vote allocations may be used to populate an entry within the vote table 206, as needed, by recording an entity identifier identifying an entity to which the vote is allocated, and the user identifier indicating the user that has cast the vote for the relevant entity.

In an example embodiment, a mechanism called "Boosts" can be used to increase exposure and stimulate growth for new members to the voting communication system. Boosts are a type of feedback from users to the eligible entities that are relevant to what was taking place within a given performance and how the entities were performing during that performance. For instance, if an entity did not receive good reviews for his or her stage presence or dance moves, the user could send a "gift" of a virtual pair of pop star dancing shoes to the entity. The user could also choose to send these same gifts to their friends, which would increase the reach of the interaction and prompt their friends to participate in the feedback and voting. Another mechanism to increase voter participation, called "record deals," could be purchased with, for example, FACEBOOK^{®} credits. The record deals would act as a premium boost and can be used to generate revenue for, for instance, a favorite charity of one or more of the eligible entities. These mechanisms thereby allow currently registered members to give "virtual superpowers" to the eligible entities within, for example, FACEBOOK^{®}. Giving one or more of the eligible entities a particular boost could generate a corresponding post on the user's FACEBOOK^{®} wall that would entice friends to sign up and participate in the voting activities.

With continued reference to FIG. 4, at operation 412, the vote casting module 308 of the vote communication application 116 determines a threshold (e.g. a maximum) number of eligible votes for a particular user, and determines whether the allocation of the use of votes received at operation 406 violates the threshold. If so, the method 400 may be curtailed or terminated. The maximum number of votes may vary by contest, entity, or other factors.

At operation 414, the verification module 306 of the vote communication application 116 may perform a verification operation with respect to the provided communication identifier (e.g., received at operation 410 or at registration operation 404). In some example embodiments, the verification may include providing verification information (e.g., a verification code) to the user using the communication identifier (e.g., by sending an SMS to the mobile telephone number or an e-mail to provide an e-mail address), and then receiving the verification information back from the user.

Following verification of the user-provided communication identifier at operation 416, the vote casting module 308 of the vote communication application 116 initiates communications to the vote receiving system 102 in order to register user votes. In an example embodiment, the initiation of the communications may include initiating telephone calls to each of a number of dedicated telephone numbers that are uniquely associated with a respective entity of the set of entities. The telephone communication, which may use a mobile telephone number as a caller ID, serves to register a user vote (on behalf of a user associated with the mobile telephone number) with a respective entity at the vote receiving system 102. In a further embodiment, the initiation of the communication may include sending a number of messages to a set of dedicated phone numbers, each of the phone numbers associated with an entity eligible to receive votes.

The initiation of communications at operation 416, which are performed on behalf of a particular user, may be performed at a preset time interval. Specifically, the vote-casting module of the vote communication application 116 may, for a specific user at a specific time interval, receive vote allocations from the vote table 206, and dial phone numbers associated with each of the entities, as per the vote allocations.

At operation 418, the vote receiving system 102 receives the communications that are initiated by the communication system 104, and registers votes for entities, based on the communications, as well as the communication identifier for each of the users on behalf of which the vote was cast. At operation 420, the vote receiving system 102 may provide a confirmation of vote registration back to the communication system 104. For example, a confirmation message may be sent from the vote receiving system 102, or, in the case of a telephone call, a signal (e.g., an audible beep) may be sent in order to indicate confirmation of receipt of the vote.

At operation 422, the vote communication application 116 then updates the vote table 206 to indicate that a vote has been successfully communicated to the vote receiving system 102 on behalf of the user. In one example embodiment, the 'vote sent to vote system' flag may be set to indicate successful communication of a vote.

Further, at operation 422, the vote communication application 116, particularly the vote total module 310, may update totals for entities and users and, at operation 424, generate and present one or more vote total interfaces to a user.

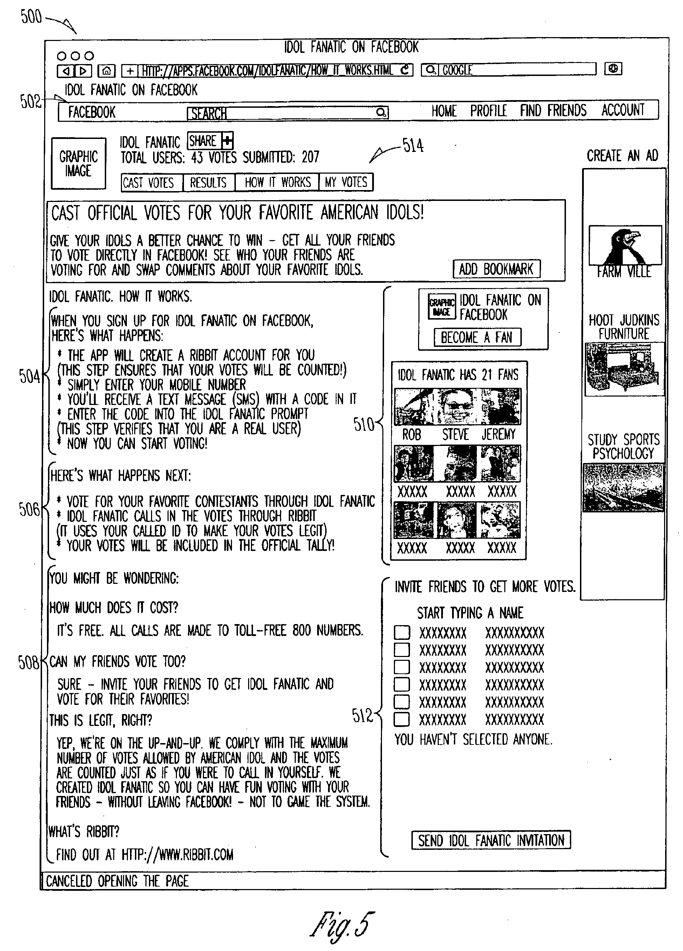

FIG. 5 is a screenshot illustrating a how it works' interface 500, according to an example embodiment. In this example embodiment, the interface 500 may be displayed after a user of the social networking system 106 accesses the vote communication application 116 of FIG. 1. As noted, the interface 500 of the vote communication application 116 is presented from the domain 502 of a social networking system (e.g., FACEBOOK.COM). The vote communication application 116 may, in this embodiment, be integrated or in communication with a number of other social networking applications 119 of the social networking system 106, both shown in FIG. 1. The interface 500 provides details regarding a vote-casting mechanism that may be supported by the vote communication application 116 of FIG. 1.

The interface 500 is shown to include a registration section 504, a voting instruction section 506, and a frequently-asked-questions (FAQ) section 508. The user is instructed by the registration section 504 how to register through, for example, the registration module 302 (FIG. 3). The voting instruction section 506 provides information to the user on how the user may cast one or more votes for an entity or entities. The FAQ section 508 provides answers to the user for a variety of commonly asked questions.

In this example embodiment, the interface 500 is also shown to include a fans section 510, an invitation section 512, and various tabs 514 to provide easy access for the user to view various other interfaces. In a specific example embodiment, the various tabs include a "cast votes" tab, a "result" tab, a "how it works" tab, and a "my votes" tab. Various interfaces described by the various tabs 514 are described, below. In an example embodiment, the fans section 510 allows the user to click on various fan icons, inquire into profiles of the various fans, and see comments and voting preferences of the various fans. The invitation section 512 lists a variety of other people with whom the user has relationships (e.g., various friends) of the user allowing the user to quickly access and invite one or more friends to join and access the vote communication application 116 (FIG. 1) as further users.

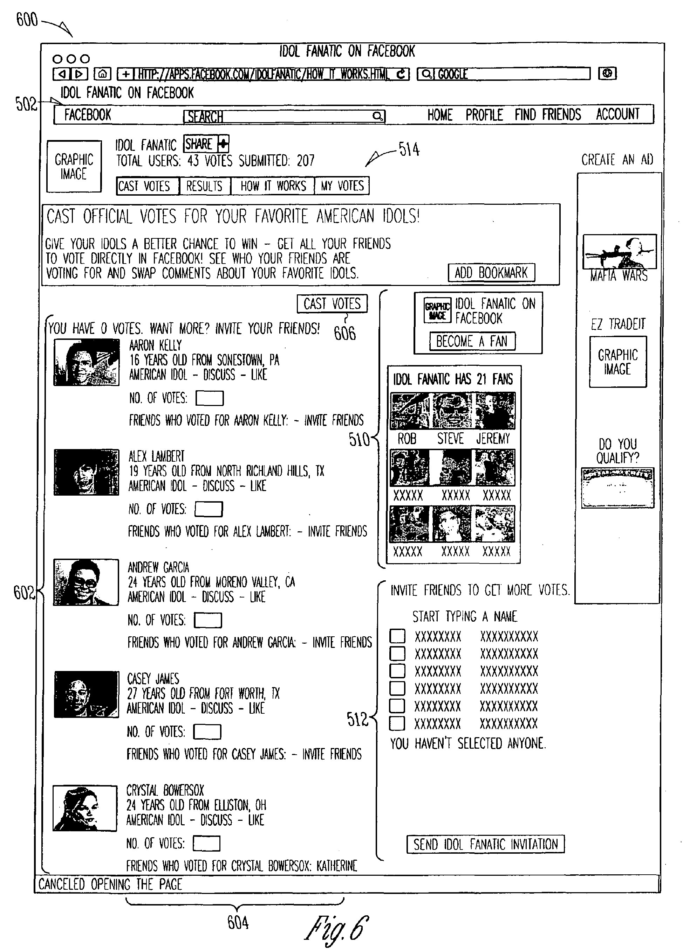

FIG. 6 is a screenshot of a vote input interface 600, according to some example embodiments. Once the user has registered through the registration module 302 (FIG. 3) and opened an account with the communication system 104 of FIG. 1, the interface module 304 generates and presents the vote input interface 600 to the user. The vote input interface 600 is shown to include an entity list 602. The user selects a number of entities (e.g., contestants) from the entity list 602 that are eligible to receive votes. The entity list 602 further includes an input block section 604 associated with each of the entities into which the user can input a number of votes. The total number of votes per entity and the total number of selected entities on which the user can vote is determined by, for example, contest organizers and may be recorded on the communication system 104. After the user completes the voting by placing appropriate voting numbers into the input block section 604, the user then selects a vote button 606 to cast the votes.

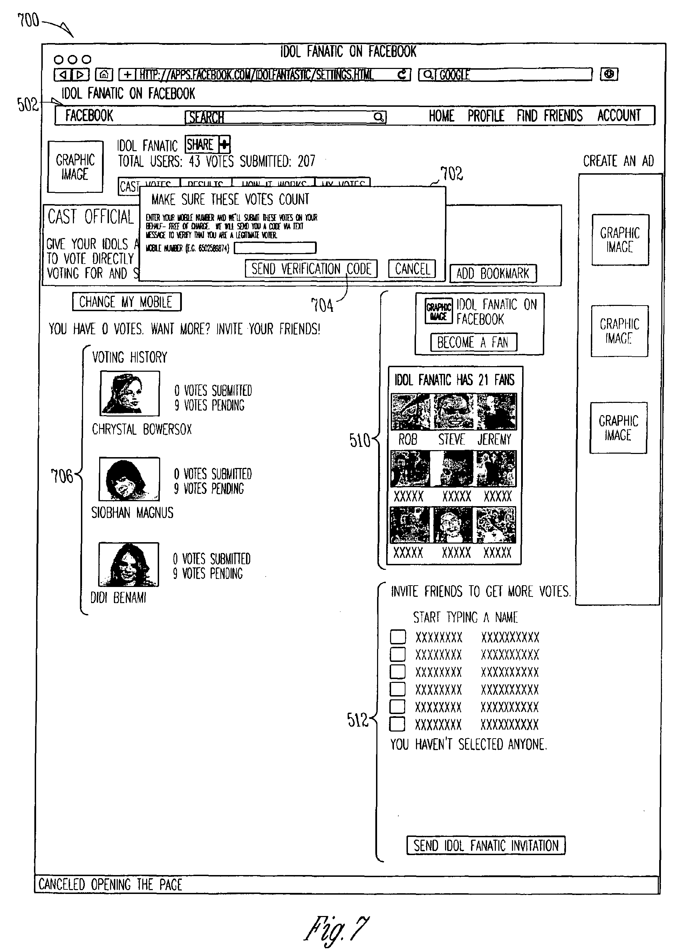

FIG. 7 is a screenshot of a vote verification interface 700, illustrating a popup window 702 that prompts a user for a communication identifier (e.g., a mobile telephone number) that is used to identify votes. Once the user enters the user's communication identifier, the user selects a send verification code button 704 and the votes are submitted on behalf of a particular user to the vote receiving system 102 of the communication system 104, both shown in FIG. 1. The communication identifier the votes as having been originated from the particular user. Specifically, a user may, in the example embodiment, input a mobile telephone number into the popup window 702 and selects the send verification code button 704. In response to the user selecting the verification code button 704, the communication system 104 sends via the verification module 306 (FIG. 3) a verification code via, for example, SMS to the relevant mobile telephone number. The user may then input this verification code back into an interface (not shown) generated by the vote communication application 116 of FIG. 1 to verify ownership and control of the relevant mobile telephone number.

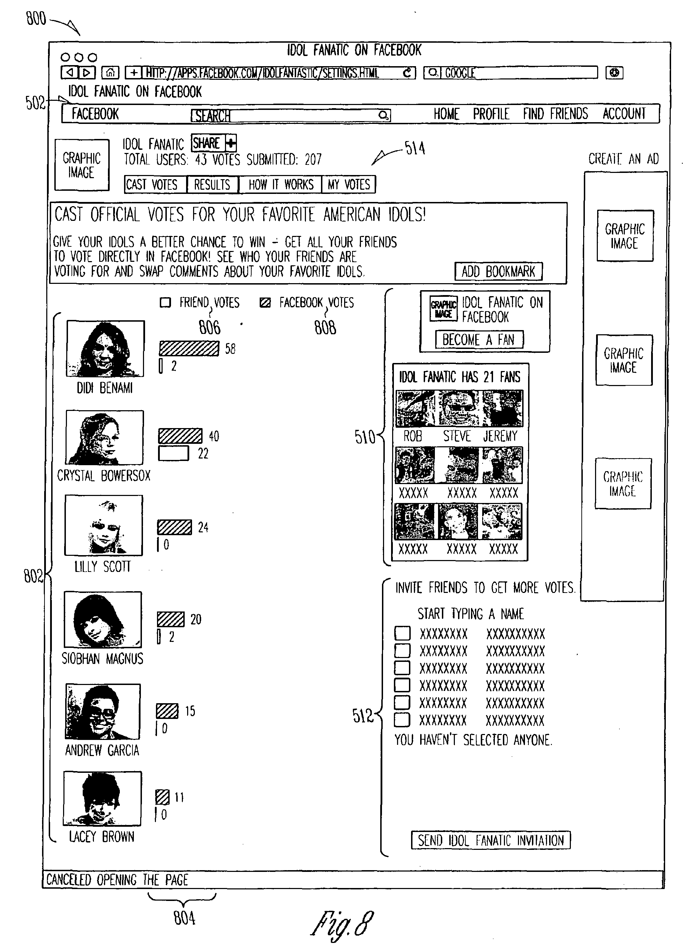

FIG. 8 is a screenshot showing a vote total interface 800, according to an example embodiment, which may be generated by the vote total module 310 of the communication system 104 of FIG. 3 and FIG. 1, respectively. In this example embodiment, the vote total interface 800 is shown to include a pictorial representation 802 of each of the entities, along with a graphical vote indication 804 of their respective votes. Additionally, the vote total interface 800 is also shown to include two legends for the graphical vote indication 804: a friends' vote indicator 806 and a total vote indicator 808. Thus, the user may readily determine any voting trend differences between votes cast by the entire social network (e.g., FACEBOOK^{®} in this example embodiment) versus how friends of the user are voting.

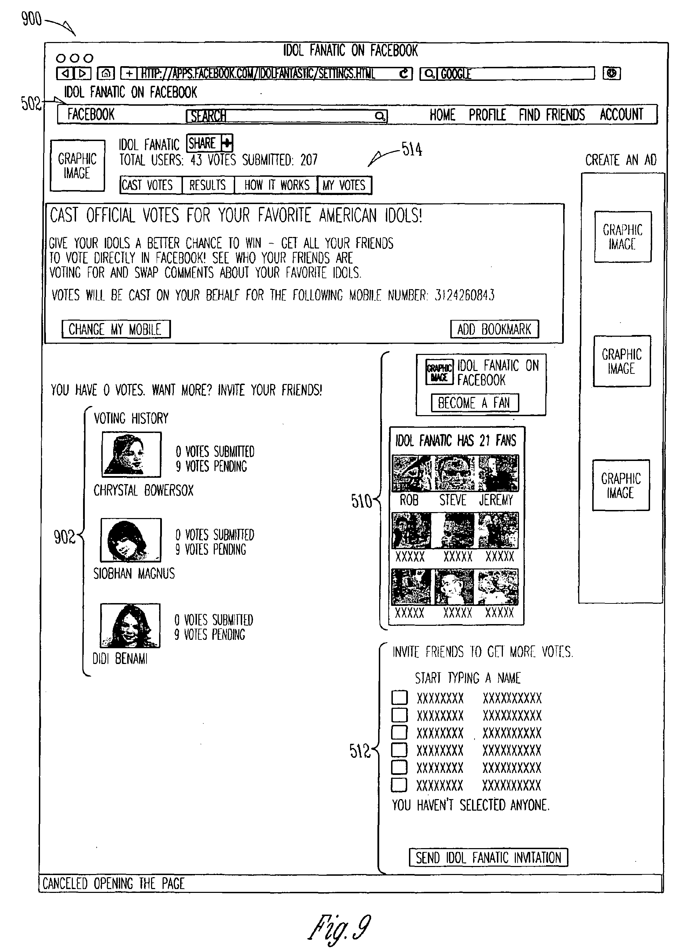

FIG. 9 is a screenshot illustrating a vote history interface 900, according to some example embodiments. The vote history interface 900 may identify further users, with which a particular user has relationships (e.g.; friends), and present information regarding the number of votes submitted and pending for a particular contest in a voting history section 902. In further example embodiments, a high resolution of voting history and information may be provided, in that the particular entities for which a further user has voted may be identified. For example, where a first friend of a user has voted for entities 1, 7, and 13 of a particular contest, this information may be identified within the vote history interface 900.

### MODULES, COMPONENTS, AND LOGIC

Certain embodiments are described herein as including logic or a number of components, modules, or mechanisms. Modules may constitute either software modules (e.g., code embodied on a machine-readable medium or in a transmission signal) or hardware modules. A hardware module is a tangible unit capable of performing certain operations and may be configured or arranged in a certain manner. In example embodiments, one or more computer systems (e.g., a standalone, client, or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired) or temporarily configured (e.g., programmed) to operate in a certain manner or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiples of such hardware modules exist contemporaneously, communications may be achieved through signal transmission (e.g., over appropriate circuits and buses) that connect the hardware modules. In embodiments in which multiple hardware modules are configured or instantiated at different times, communications between the hardware modules may be achieved, for example, through the storage and retrieval of information in memory structures to which the multiple hardware modules have access. For example, one hardware module may perform an operation, and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or more processors or processor-implemented modules. The performance of certain one or ones of the operations may be distributed among the one or more processors, not only residing within a single machine, but deployed across a number of machines. In some example embodiments, the processor or processors may be located in a single location (e.g., within a home environment, an office environment, or as a portion of a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors); these operations being accessible via a network (e.g., the Internet) and via one or more appropriate interfaces (e.g., Application Program Interfaces (APIs)).

### ELECTRONIC APPARATUS AND SYSTEM

Example embodiments may be implemented in digital electronic circuitry, or in computer hardware, firmware, software, or in combinations thereof. Example embodiments may be implemented using a computer program product; for example, a computer program tangibly embodied in an information carrier; or, in another example, in a machine-readable medium for execution by, or to control the operation of, data processing apparatus, such as, for example a programmable processor, a computer, or multiple computers.

A computer program can be written in any form of programming language, including compiled and interpreted languages, and it can be deployed in any form, including as a stand-alone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry; for example, a field programmable gate array (FPGA) or an application-specific integrated circuit (ASIC).

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that that both hardware and software architectures require consideration. Specifically, it will be appreciated that the choice of whether to implement certain functionality in permanently configured hardware (e.g., an ASIC), in temporarily configured hardware (e.g., a combination of software and a programmable processor), or a combination of permanently and temporarily configured hardware may be a design choice. Below are set out hardware (e.g., machine) and software architectures that may be deployed, in various example embodiments.

### EXAMPLE MACHINE ARCHITECTURE AND MACHINE-READABLE MEDIUM

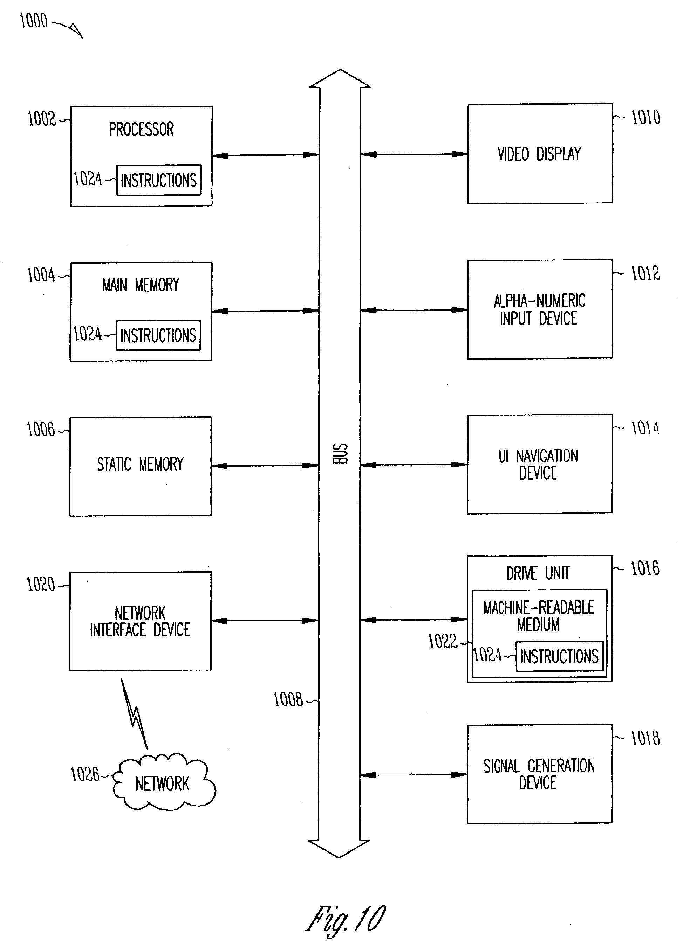

FIG. 10 is a block diagram of machine in the example form of a computer system 1000 within which instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in a server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1000 includes a processor 1002 (e.g., a central processing unit (CPU), a graphics processing unit (GPU), or both), a main memory 1004, and a static memory 1006, which communicate with each other via a bus 1008. The computer system 1000 may further include a video display unit 1010 (e.g., a liquid crystal display (LCD) or a cathode ray tube (CRT)). The computer system 1000 is also shown to include an alphanumeric input device 1012 (e.g., a keyboard), a user interface (UI) navigation device 1014 (e.g., a mouse), a disk drive unit 1016, a signal generation device 1018 (e.g., a speaker), and a network interface device 1020.

### MACHINE-READABLE MEDIUM

The disk drive unit 1016 includes a non-transitory machine-readable storage medium 1022 on which is stored one or more sets of instructions and data structures (e.g., software) 1024 embodying or utilized by any one or more of the methodologies or functions described herein. The instructions 1024 may also reside, completely or at least partially, within the main memory 1004 or within the processor 1002 during execution thereof by the computer system 1000; the main memory 1004, and the processor 1002 also constituting machine-readable media.

While the non-transitory machine-readable storage medium 1022 is shown in an example embodiment to be a single medium, the term "non-transitory machine-readable medium" may include a single medium or multiple media (e.g., a centralized or distributed database, or associated caches and servers) that store the one or more instructions or data structures. The term "non-transitory machine-readable medium" shall also be taken to include any tangible medium that is capable of storing, encoding, or carrying instructions for execution by the machine and that cause the machine to perform any one or more of the methodologies of the inventive subject matter described herein, or that is capable of storing, encoding, or carrying data structures utilized by or associated with such instructions. The term "non-transitory machine-readable medium" shall accordingly be taken to include, but not be limited to, solid-state memories, and optical and magnetic media. Specific examples of machine-readable media include non-volatile memory, including by way of example semiconductor memory devices, e.g., Erasable Programmable Read-Only Memory (EPROM), Electrically Erasable Programmable Read-Only Memory (EEPROM), and flash memory devices; magnetic disks such as internal hard disks and removable disks; magneto-optical disks; and CD-ROM and DVD-ROM disks.

### TRANSMISSION MEDIUM

The instructions 1024 may further be transmitted or received over a communications network 1026 using a transmission medium. The instructions 1024 may be transmitted using the network interface device 1020 and any one of a number of well-known transfer protocols (e.g., HTTP). Examples of communication networks include a local area network ("LAN"), a wide area network ("WAN"), the Internet, mobile telephone networks, Plain Old Telephone Service (POTS) networks, and wireless data networks (e.g., WiFi and WiMax networks). The term "transmission medium" shall be taken to include any intangible medium that is capable of storing, encoding, or carrying instructions for execution by the machine, and includes digital or analog communications signals or other intangible media to facilitate communication of such software.

Although an embodiment has been described with reference to specific example embodiments, it will be evident that various modifications and changes may be made to these embodiments without departing from the broader spirit and scope of the invention. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A method comprising:
receiving, at a communication system (104), a request from a user for a vote communication application (116); and
based on receiving the request, the communication system (104) presents a vote input interface to the user;
receiving, at a communication system (104), an allocation of user votes from the vote input interface via a web-interface (114), wherein each user vote in the allocation of user votes is associated with an entity of a set of entities eligible to receive user votes; and
automatically initiating communications from the communication system (104) to a vote receiving system (102) in accordance with the allocation of user votes, the communications in order to register a user vote for the entity with the vote receiving system (102) to register the user votes with the vote receiving system (102), the method **characterized by**
the communications to register the user votes with the vote receiving system (102) includes initiating a telephone call to a dedicated telephone number uniquely associated with an entity of the set of entities.

2. The method of claim 1, including the receiving, at the communication system (104), a communication identifier associated with a user, wherein the communication identifier is provided from the communication system to the vote receiving system (102).

3. The method of claim 2, wherein the communication system (104) is to verify that the communication identifier is associated with the user by providing verification information to the user using the communication identifier, and receiving the verification information back from the user.

4. The method of claim 2, wherein the communication identifier is provided to the vote receiving system (102) as part of the automatically initiating the communications from the communication system (104) to the vote receiving system (102).

5. The method of claim 2, wherein the communication identifier comprises at least one of a telephone number, an e-mail address, or a user name/password combination.

6. The method of claim 1, wherein the allocation of user votes is received at the communication system (104) via a vote input interface that is presented to a user.

7. The method of claim 1, including presenting a vote input user interface to a user, the vote input user interface to receive the allocation of user.

8. The method of claim 7, wherein the vote input user interface is to receive a communication identifier from the user, the communication identifier to be provided from the communication system (104) to the vote receiving system (102) in order to identify a source of the user votes.

9. The method of claim 1, wherein the communication system (104) is to determine a plurality of relationships of a user by providing authorization information, received from the user, to a social networking system (106) in order to authorize the social networking system (106) to provide relationship information of the user to the communication system (104).

10. The method of claim 1, including receiving, at the communication system (104), identification information for a plurality of further users from a user, and, using the identification information, inviting the plurality of further users to register with the communication system (104) and to provide further allocations of user votes.

11. A non-transitory machine-readable storage medium comprising instructions that, when executed by one or more processors, cause the one or more processors to perform a method as claimed in Claim 1.

12. A system to enrich voting experiences for contests of competitions, the system comprising:
a social networking interface to receive information for a social networking system (106); a communication system (104) including
a receiver configured to receive a request from a user for a vote communication application (116),
an interface module to present a vote input interface to the user,
a voting interface to receive an allocation of votes from a user from the vote input interface via a web interface (114), wherein each user vote of the allocation of user votes is associated with an entity of a set of entities eligible to receive the user votes; and
a voting communications interface adapted to automatically initiate communications from the communication system (104) to a vote receiving system (102) in accordance with the allocation of the user votes in order to register the user votes with the vote receiving system (102), **characterised in that** the communications includes means adapted for initiating a telephone call to a dedicated telephone number uniquely associated with an entity of the set of entities.

13. A method comprising:
receiving, at a communication system (104), a request from a user for a vote communication application (116); and
based on receiving the request, the communication system (104) presents a vote input interface to the user;
receiving, at a communication system (104), an allocation of user votes from the vote input interface via a web-interface (114), wherein each user vote in the allocation of user votes is associated with an entity of a set of entities eligible to receive user votes; and
automatically initiating communications from the communication system (104) to a vote receiving system (102) in accordance with the allocation of user votes, the method **characterized by** the communications including sending a Short Message Service message to a dedicated telephone number uniquely associated with an entity of the set of entities in order to register a user vote for the entity with the vote receiving system (102).

## Patentansprüche

1. Verfahren, das umfasst:
Empfangen einer Anfrage eines Nutzers zu einer Abstimmungskommunikationsanwendung (116) bei einem Kommunikationssystem (104); wonach
das Kommunikationssystem (104) basierend auf dem Empfang der Anfrage dem Nutzer eine Oberfläche für die Abstimmungseingabe darbietet;
Empfangen, bei einem Kommunikationssystem (104), einer Zuordnung der Nutzerabstimmungen von der Oberfläche für die Abstimmungseingabe über eine Web-Oberfläche (114), wobei in der Zuordnung der Nutzerabstimmungen jede Nutzerabstimmung mit einer Einheit aus einem Satz von Einheiten assoziiert wird, die für den Empfang von Nutzerabstimmungen auswählbar sind; und
Automatisches Starten von Mitteilungen von dem Kommunikationssystem (104) an ein Abstimmungsempfangssystem (102) in Übereinstimmung mit der Zuordnung der Nutzerabstimmungen, wobei die Mitteilungen zur Registrierung von Nutzerabstimmungen mit dem Abstimmungsempfangssystem (102) dazu dienen, eine Nutzerabstimmung für die Einheit mit dem Abstimmungsempfangssystem (102) zu registrieren, wobei das Verfahren **dadurch gekennzeichnet ist, dass**
die Mitteilungen für die Registrierung der Nutzerabstimmungen mit dem Abstimmungsempfangssystem (102) das Starten eines Telefonanrufs an eine bestimmte Telefonnummer einschließt, die ausschließlich mit einer Einheit aus dem Satz von Einheiten assoziiert ist.

2. Verfahren nach Anspruch 1, das das Empfangen, bei dem Kommunikationssystem (104), eines Kommunikationsidentifikators einschließt, der mit einem Nutzer assoziiert ist, worin der Kommunikationsidentifikator von dem Kommunikationssystem an das Abstimmungsempfangssystem (102) geliefert wird.

3. Verfahren nach Anspruch 2, wobei das Kommunikationssystem (104) dafür vorgesehen ist, zu überprüfen, dass der Kommunikationsidentifikator mit dem Nutzer assoziiert ist, indem es unter Verwendung des Kommunikationsidentifikators Überprüfungsinformationen an den Nutzer liefert und die Überprüfungsinformationen von dem Nutzer zurück erhält.

4. Verfahren nach Anspruch 2, wobei der Kommunikationsidentifikator an das Abstimmungsempfangssystem (102) geliefert wird als Teil des automatischen Startens der Mitteilungen von dem Kommunikationssystem (104) an das Abstimmungsempfangssystem (102).

5. Verfahren nach Anspruch 2, wobei der Kommunikationsidentifikator mindestens eine Telefonnummer, eine e-mail-Adresse oder eine Benutzername/Passwort-Kombination umfasst.

6. Verfahren nach Anspruch 1, wobei die Zuordnung von Nutzerabstimmungen bei dem Kommunikationssystem (104) über eine Oberfläche für die Abstimmungseingabe empfangen wird, die einem Nutzer dargeboten wird.

7. Verfahren nach Anspruch 1, das einschließt, einem Nutzer eine Benutzeroberfläche für die Abstimmungseingabe darzubieten, wobei die Benutzeroberfläche für die Abstimmungseingabe dafür vorgesehen ist, die Zuordnung von Benutzer zu empfangen.

8. Verfahren nach Anspruch 7, wobei die Benutzeroberfläche für die Abstimmungseingabe dafür vorgesehen ist, einen Kommunikationsidentifikator von dem Nutzer zu empfangen, wobei der Kommunikationsidentifikator von dem Kommunikationssystem (104) an das Abstimmungsempfangssystem (102) zu liefern ist, um eine Quelle der Benutzerabstimmungen zu identifizieren.

9. Verfahren nach Anspruch 1, wobei das Kommunikationssystem (104) dafür vorgesehen ist, eine Vielzahl von Beziehungen eines Nutzers zu ermitteln, indem Berechtigungsinformationen, die von dem Nutzer erhalten werden, an ein soziales Netzwerksystem (106) geliefert werden, um dem sozialen Netzwerksystem (106) die Berechtigung zu geben, Beziehungsinformationen des Nutzers an das Kommunikationssystem (104) zu liefern.

10. Verfahren nach Anspruch 1, das es einschließt, bei dem Kommunikationssystem (104) Identifikationsinformationen zu einer Vielzahl weiterer Nutzer von einem Nutzer zu erhalten und unter Verwendung der Identifikationsinformationen die Vielzahl weiterer Nutzer einzuladen, sich in dem Kommunikationssystem (104) zu registrieren und für weitere Zuordnungen von Nutzerabstimmungen zu sorgen.

11. Nicht-flüchtiges machinenlesbares Speichermedium, das Anweisungen enthält, die, wenn sie von einem oder mehreren Prozessoren ausgeführt werden, den einen oder die mehreren Prozessoren dazu veranlasst, ein Verfahren auszuführen, wie es in Anspruch 1 beansprucht wird.

12. System für das Bereichern von Abstimmungserfahrungen für Wettbewerbe und Wettkämpfe, wobei das System umfasst:
eine Oberfläche eines sozialen Netzwerks, um Informationen für ein soziales Netzwerksystem (106) zu empfangen;
ein Kommunikationssystem (104), das einschließt:
einen Empfänger, der so gestaltet ist, dass er eine Anfrage eines Nutzers zu einer Abstimmungskommunikationsanwendung (116) empfängt;
ein Oberflächenmodul, um dem Nutzer eine Oberfläche für die Abstimmungseingabe darzubieten;
eine Abstimmungsoberfläche, um eine Zuordnung von Abstimmungen eines Nutzer von der Oberfläche für die Abstimmungseingabe über eine Web-Oberfläche (114) zu empfangen, worin jede Nutzerabstimmung der Zuordnung von Nutzerabstimmungen mit einer Einheit aus einem Satz von Einheiten assoziiert wird, die für den Empfang von Nutzerabstimmungen auswählbar sind; und
eine Abstimmungskommunikationsoberfläche, die daran angepasst ist, automatisch Mitteilungen von dem Kommunikationssystem (104) an ein Abstimmungsempfangssystem (102) in Übereinstimmung mit der Zuordnung der Nutzerabstimmungen zu starten, um die Nutzerabstimmungen mit dem Abstimmungsempfangssystem (102) zu registrieren, **dadurch gekennzeichnet, dass** die
Mitteilungen Mittel einschließen, die daran angepasst sind, einen Telefonanruf an eine bestimmte Telefonnummer zu starten, die ausschließlich mit einer Einheit aus dem Satz von Einheiten assoziiert ist.

13. Verfahren, das umfasst:
Empfangen einer Anfrage eines Nutzers zu einer Abstimmungskommunikationsanwendung (116) bei einem Kommunikationssystem (104); wonach
das Kommunikationssystem (104) dem Anwender basierend auf dem Empfang der Anfrage eine Oberfläche für die Abstimmungseingabe darbietet;
Empfangen, bei einem Kommunikationssystem (104), einer Zuordnung von Nutzerabstimmungen von der Oberfläche für die Abstimmungseingabe über eine Web-Oberfläche (114), wobei jede Nutzerabstimmung in der Zuordnung von Nutzerabstimmungen mit einer Einheit aus einem Satz von Einheiten assoziiert wird, die für den Empfang von Nutzerabstimmungen auswählbar sind; und
automatisches Starten von Mitteilungen von dem Kommunikationssystem (104) au ein Abstimmungsempfangssystem (102) in Übereinstimmung mit der Zuordnung der Nutzerabstimmungen, wobei das Verfahren **dadurch gekennzeichnet ist, dass** die Mitteilungen das Versenden von Short-Message-Service-Nachrichten an eine bestimmte Nummer einschließt, die ausschließlich mit einer Einheit aus dem Satz von Einheiten assoziiert ist, um eine Nutzerabstimmung für die Einheit mit dem Abstimmungsempfangssystem (102) zu registrieren.

## Revendications

1. Procédé comprenant :
la réception, au niveau d'un système de communication (104), d'une demande d'un utilisateur pour une application de communication de vote (116) ; et
sur la base de la réception de la demande, le système de communication (104) présente une interface d'entrée de vote à l'utilisateur ;
la réception, au niveau d'un système de communication (104), d'une attribution de votes d'utilisateur à partir de l'interface d'entrée de vote par l'intermédiaire d'une interface Web (114), dans lequel chaque vote d'utilisateur dans l'attribution de votes d'utilisateur est associé à une entité d'un ensemble d'entités éligibles pour recevoir des votes d'utilisateur ; et
le lancement automatique de communications du système de communication (104) vers un système de réception de vote (102) conformément à l'attribution de votes d'utilisateur, les communications servant à enregistrer un vote d'utilisateur pour l'entité avec le système de réception de vote (102) pour enregistrer les votes d'utilisateur avec le système de réception de vote (102), le procédé étant **caractérisé en ce que**
les communications pour enregistrer les votes d'utilisateur avec le système de réception de vote (102) comprennent le lancement d'un appel téléphonique vers un numéro de téléphone dédié associé de manière unique à une entité de l'ensemble d'entités.

2. Procédé selon la revendication 1, comprenant la réception, au niveau du système de communication (104), d'un identifiant de communication associé à un utilisateur, dans lequel l'identifiant de communication est fourni par le système de communication au système de réception de vote (102).

3. Procédé selon la revendication 2, dans lequel le système de communication (104) sert à vérifier que l'identifiant de communication est associé à l'utilisateur en fournissant des informations de vérification à l'utilisateur en utilisant l'identifiant de communication, et en recevant les informations de vérification en retour de l'utilisateur.

4. Procédé selon la revendication 2, dans lequel l'identifiant de communication est fourni au système de réception de vote (102) en tant que partie du lancement automatique des communications du système de communication (104) vers le système de réception de vote (102).

5. Procédé selon la revendication 2, dans lequel l'identifiant de communication comprend au moins l'un d'un numéro de téléphone, d'une adresse de courrier électronique, ou d'une combinaison nom d'utilisateur/mot de passe.

6. Procédé selon la revendication 1, dans lequel l'attribution de votes d'utilisateur est reçue au niveau du système de communication (104) par l'intermédiaire d'une interface d'entrée de vote qui est présentée à un utilisateur.

7. Procédé selon la revendication 1, comprenant la présentation d'une interface utilisateur d'entrée de vote à un utilisateur, l'interface utilisateur d'entrée de vote servant à recevoir l'attribution d'utilisateur.

8. Procédé selon la revendication 7, dans lequel l'interface utilisateur d'entrée de vote sert à recevoir un identifiant de communication de l'utilisateur, l'identifiant de communication devant être fourni par le système de communication (104) au système de réception de vote (102) afin d'identifier une source des votes d'utilisateur.

9. Procédé selon la revendication 1, dans lequel le système de communication (104) sert à déterminer une pluralité de relations d'un utilisateur en fournissant des informations d'autorisation, reçues de l'utilisateur, à un système de réseautage social (106) afin d'autoriser le système de réseautage social (106) à fournir les informations de relation de l'utilisateur au système de communication (104).

10. Procédé selon la revendication 1, comprenant la réception, d'un utilisateur, au niveau du système de communication (104), d'informations d'identification pour une pluralité d'autres utilisateurs, et, en utilisant les informations d'identification, l'invitation de la pluralité d'autres utilisateurs à s'enregistrer auprès du système de communication (104) et à fournir d'autres attributions de votes d'utilisateur.

11. Support de mémorisation non transitoire pouvant être lu par une machine comprenant des instructions qui, lorsqu'elles sont exécutées par un ou plusieurs processeurs, amènent lesdits un ou plusieurs processeurs à exécuter un procédé selon la revendication 1.

12. Système pour enrichir des expériences de vote pour des concours de compétitions, le système comprenant :
une interface de réseautage social pour recevoir des informations pour un système de réseautage social (106) ;
un système de communication (104) comprenant :
un récepteur configuré pour recevoir une demande d'un utilisateur pour une application de communication de vote (116),
un module d'interface pour présenter une interface d'entrée de vote à l'utilisateur,
une interface de vote pour recevoir une attribution de votes d'un utilisateur à partir de l'interface d'entrée de vote par l'intermédiaire d'une interface Web (114), dans lequel chaque vote d'utilisateur de l'attribution de votes d'utilisateur est associé à une entité d'un ensemble d'entités éligibles pour recevoir les votes d'utilisateur ; et
une interface de communication de vote conçue pour lancer automatiquement des communications du système de communication (104) vers un système de réception de vote (102) conformément à l'attribution des votes d'utilisateur afin d'enregistrer les votes d'utilisateur avec le système de réception de vote (102), **caractérisé en ce que** les communications comprennent des moyens conçus pour lancer un appel téléphonique vers un numéro de téléphone dédié associé de manière unique à une entité de l'ensemble d'entités.

13. Procédé comprenant :
la réception, au niveau d'un système de communication (104), d'une demande d'un utilisateur pour une application de communication de vote (116) ; et
sur la base de la réception de la demande, le système de communication (104) présente une interface d'entrée de vote à l'utilisateur ;
la réception, au niveau d'un système de communication (104), d'une attribution de votes d'utilisateur à partir de l'interface d'entrée de vote par l'intermédiaire d'une interface Web (114), dans lequel chaque vote d'utilisateur dans l'attribution de votes d'utilisateur est associé à une entité d'un ensemble d'entités éligibles pour recevoir des votes d'utilisateur ; et
le lancement automatique de communications du système de communication (104) vers un système de réception de vote (102) conformément à l'attribution de votes d'utilisateur, le procédé étant **caractérisé en ce que** les communications comprennent l'envoi d'un message SMS à un numéro de téléphone dédié associé de manière unique à une entité de l'ensemble d'entités afin d'enregistrer un vote d'utilisateur pour l'entité avec le système de réception de vote (102).
